# EUROPÄISCHE PATENTSCHRIFT

(11) **EP 2 665 980 B1**
(45) Veröffentlichungstag und Bekanntmachung des Hinweises auf die Patenterteilung: **18.04.2018**
(21) Anmeldenummer: 12700016.4
(22) Anmeldetag: 03.01.2012
(51) Int. Cl.: F28D 20/02

(54) **LATENTWÄRMESPEICHER**
LATENT HEAT ACCUMULATOR
RÉGULATEUR THERMIQUE À CHANGEMENT D'ÉTAT

(30) Priorität: 21.01.2011 DE 102011002965
(43) Veröffentlichungstag der Anmeldung: 27.11.2013
(73) Patentinhaber: BSH Hausgeräte GmbH, 81739 München (DE)
(72) Erfinder: STOLZE, Andreas, 14612 Falkensee (DE)
(86) Internationale Anmeldenummer: PCT/EP2012/050037
(87) Internationale Veröffentlichungsnummer: WO 2012/098010

(56) Entgegenhaltungen:
- EP-A1- 0 203 501
- DE-A1- 2 916 839
- DE-A1-102008 033 527
- DE-C1- 19 953 113
- GB-A- 2 124 746
- US-A- 4 164 253

## Beschreibung

Die Erfindung betrifft eine Vorrichtung zum Speichern von einem Fluid entzogener, thermischer Energie in Form von latenter Wärme, mit einer einen Zugang und einen Abgang aufweisenden, von dem Fluid durchströmbaren Kammer und wenigstens zwei getrennt voneinander in der Kammer angeordneten, von dem Fluid umströmbaren Speichermedien, deren Phasenübergangstemperaturen sich unterscheiden.

Des Weiteren betrifft die Erfindung ein Haushaltsgerät mit wenigstens einer von einem Fluid durchströmbaren Leitung.

Aus DE 29 16 839 A1 ist eine Vorrichtung zum Speichern von thermischer Energie bekannt, bei der mehrere Latentwärmespeicher hintereinander geschaltet sind, deren Speichermedien temperaturmäßig abgestufte Umwandlungstemperaturen aufweisen. Die einzelnen Latentwärmespeicher sind rohrförmig ausgebildet und werden von dem Fluid durchströmt. Ein wärmeabgebendes Fluid strömt zunächst durch den Latentwärmespeicher, dessen Speichermedium die höchste Phasenübergangstemperatur aufweist, wodurch dem Fluid eine erste Wärmemenge entzogen wird. Anschließend strömt das kühlere Fluid durch einen weiteren Latentwärmespeicher, bei dem die Phasenübergangstemperatur des Speichermediums an die geringere Temperatur des Fluids angepasst, also geringer ist. Mit einer solchen Vorrichtung kann eine Rückgewinnung von in Abwässern enthaltener, thermischer Energie erfolgen, wozu die Vorrichtung in einer Abwässer transportierenden Leitung anzuordnen ist. Die Dokumente EP0203501, US4164253, DE102008033527 offenbaren ebenfalls eine solche Vorrichtung. Aufgabe der Erfindung ist es, eine neuartige Vorrichtung zum Speichern von einem Fluid entzogener, thermischer Energie in Form von latenter Wärme bereitzustellen, mit der dem Fluid eine maximale Wärmemenge entzogen werden kann.

Diese Aufgabe wird durch eine Vorrichtung der eingangs genannten Art erfindungsgemäß dadurch gelöst, dass die Positionierung der Speichermedien relativ zur Kammer in Abhängigkeit der baulich bedingt unterschiedlichen Strömungsgeschwindigkeiten des Fluids in der Kammer derart ausgewählt ist, dass das Speichermedium mit der niedrigeren Phasenübergangstemperatur in einem Bereich der Kammer angeordnet ist, in dem die Strömungsgeschwindigkeit des Fluids geringer als in dem Bereich der Kammer ist, in dem das Speichermedium mit der höheren Phasenübergangstemperatur angeordnet ist.

Der Erfindung liegt die Erkenntnis zugrunde, dass der Übergang von Wärme von dem Fluid auf ein Speichermedium stark von der Strömungsgeschwindigkeit abhängt, mit der das Fluid das Speichermedium umströmt. Daher wird mit der Erfindung vorgeschlagen, das für einen Bereich der Kammer bestimmte Speichermedium in Abhängigkeit der dort jeweilig gegebenen, baulich bedingten Strömungsgeschwindigkeit des Fluids auszuwählen. In Bereichen der Kammer, in denen das Fluid mit einer höheren Geschwindigkeit strömt, sollte ein Speichermedium mit einer Phasenübergangstemperatur ausgewählt werden, die höher ist, als die eines Speichermediums, das in Bereichen der Kammer angeordnet ist, in denen die Strömungsgeschwindigkeit niedriger ist.

Die unterschiedlichen Strömungsgeschwindigkeiten des die Kammer der erfindungsgemäßen Vorrichtung durchströmenden Fluids kommen dadurch zustande, dass die Kammer meist nicht rohrförmig und mit einem gleichbleibenden Querschnitt ausgebildet ist. Stattdessen wird eine solche Kammer, insbesondere für ihren Einsatz bei Haushaltsgeräten, die eine von einem Fluid durchströmbare Leitung aufweisen, möglichst kompakt ausgebildet, um möglichst raumsparend ausgestaltet und einsetzbar zu sein. Dieses bedingt jedoch, dass beispielsweise der Zugang und der Abgang der Kammer nicht auf derselben Achse liegen. Des Weiteren können produktionstechnische Faktoren eine Rolle spielen, welche eine bestimmte, von einem Rohr abweichende Ausgestaltung der Kammer bedingen und erfordern. Um ein möglichst gleichmäßiges Durchströmen einer solchen Kammer zu ermöglichen, könnten Einrichtungen zum gezielten Leiten des Fluids in der Kammer angeordnet werden, was jedoch mit größeren und ungewünschten Strömungsverlusten einhergeht. Durch die Erfindung kann auf diese Maßnahme verzichtet und dennoch eine Vorrichtung mit höchster Effizienz bzgl. der dem Fluid entziehbaren Wärmemenge bereitgestellt werden.

Im Rahmen der Erfindung wird unter einem Fluid sowohl ein gasförmiges als auch ein flüssiges Medium verstanden. Des Weiteren kann die latente Wärme als Verdampfungswärme, Schmelzwärme, Sublimationswärme oder Kristallisationswärme gegeben sein. Dementsprechend kann es sich bei der Phasenübergangstemperatur um eine Temperatur für den Phasenübergang flüssig-gasförmig, fest-flüssig, fest-gasförmig bzw. amorph-kristallin handeln. Die Erfindung ist nicht auf die Verwendung eines bestimmten Phasenübergangs oder auf eine der beiden Ausgestaltungen des den Latentwärmespeicher durchströmenden Fluids beschränkt.

Gemäß der Erfindung kann die Kammer mit mehr als zwei verschiedenen, getrennt voneinander angeordneten Speichermedien bestückt sein. Insbesondere können in der Kammer der Vorrichtung Speichermedien mit drei oder mehreren unterschiedlichen Phasenübergangstemperaturen angeordnet werden. Eine solche Maßnahme kann sinnvoll sein, wenn die Kammer derart ausgebildet ist, dass stark voneinander abweichende Strömungsgeschwindigkeiten in der Kammer auftreten. Die verschiedenen Phasenübergangstemperaturen der Speichermedien können sich beispielsweise um bis zu etwa 20 °K unterscheiden. Dem Fachmann sind verschiedenste Speichermedien mit unterschiedlichen Phasenübergangstemperaturen bekannt, so dass er im Rahmen seines Fachwissens eine Anpassung der erfindungsgemäßen Vorrichtung an verschiedenste Gegebenheiten vornehmen kann.

Es kann zudem vorgesehen sein, unterschiedliche Mengen der verschiedenen Speichermedien einzusetzen. Beispielsweise kann die zusammenhängende Menge des Speichermediums mit einer höheren Phasenübergangstemperatur größer als die zusammenhängende Menge des Speichermediums mit einer niedrigeren Phasenübergangstemperatur sein. Dieses ist deshalb von Vorteil, da im Bereich von höheren Strömungsgeschwindigkeiten dem Fluid eine größere Wärmemenge entnehmbar ist, die in einer größeren Menge an Speichermedium speicherbar ist. Da das Speichermedium mit einer höheren Phasenübergangstemperatur in solchen Bereichen angeordnet ist, könnte hierzu die zusammenhängende Menge dieses Materials größer als die zusammenhängende Menge des Speichermediums mit einer niedrigeren Phasenübergangstemperatur ausgewählt werden. Unter einer zusammenhängenden Menge wird hier die Menge an Speichermedium verstanden, welche räumlich von anderen Mengen von Speichermedium getrennt ist.

Nach einer vorteilhaften Ausgestaltung der Erfindung liegen der Zugang auf einer Zugangsachse und der Abgang auf einer Abgangsachse, wobei die Zugangsachse winklig zu der Abgangsachse angeordnet ist. Beispielsweise können Zugangsachse und Abgangsachse unter einem 90°-Winkel zueinander angeordnet sein. Diese Ausgestaltung der Erfindung dient der Schaffung einer möglichst kompakt ausgebildeten und damit raumsparend einsetzbaren Vorrichtung, die an die anwendungsspezifischen Bedingungen angepasst ist.

Eine weitere vorteilhafte Ausgestaltung der Erfindung sieht vor, dass wenigstens ein Speichermedium zumindest teilweise mit einer Glasummantelung versehen ist. Jede Art Speichermedium bedarf einer Ummantelung, um nicht in unmittelbaren Kontakt mit dem Fluid zu treten. Hierbei sind unterschiedlichste Materialien denkbar. Für am geeignetsten befunden sind jedoch solche Materialien, welche einen guten Wärmeübergang zwischen dem Fluid und dem jeweiligen Speichermedium ermöglichen. Glas hat sich in diesem Zusammenhang als geeignetes Material erwiesen.

Ferner wird vorgeschlagen, dass die Phasenübergangstemperaturen dem Phasenübergang fest-flüssig zugeordnet sind. Diese Ausgestaltung der Speichermedien ist einfach realisierbar und erlaubt den Rückgriff auf eine Vielzahl von bekannten Speichermedien mit unterschiedlichen Phasenübergangstemperaturen, wodurch eine sehr flexible Anpassung der erfindungsgemäßen Vorrichtung an unterschiedlichste Gegebenheiten erfolgen kann.

Mit der Erfindung wird des Weiteren ein Haushaltsgerät der eingangs genannten Art vorgeschlagen, welches erfindungsgemäß mit einer Vorrichtung nach einer der oben genannten Ausgestaltungen oder einer beliebigen Kombination derselben ausgestattet ist, wobei die Vorrichtung in der Leitung angeordnet ist. Ein solches Haushaltsgerät kann beispielsweise eine Waschmaschine, Spülmaschine oder ein Trockner sein. Die Erfindung ist jedoch nicht hierauf begrenzt. Vielmehr können auch industriell eingesetzte Geräte oder Verbrennungsmotoren mit einer erfindungsgemäßen Vorrichtung ausgestattet werden, welche wenigstens eine ein Fluid transportierende Leitung aufweisen. Mit der erfindungsgemäßen Vorrichtung können Geräte mit der Funktionalität der Energierückgewinnung ausgestattet werden. Sie können die in einem zum jeweiligen Zweck eingesetzten Fluid enthaltene, thermische Energie, welche vor der Durchführung des Zwecks, beispielsweise eines Spülvorgangs, dem Fluid zugeführt worden ist, wenigstens teilweise aus dem Fluid zurückgewinnen. Die zurück gewonnene Energie kann anschließend unter Verbesserung der Erergieeffizienz eines solchen Gerätes einem folgenden Arbeitsvorgang zugeführt werden. Bei Verbrennungsmotoren besteht die Möglichkeit, die ansonsten ungenutzte Abwärme in bestimmten Betriebszuständen zur Erwärmung der Ladeluft oder des Kühlwassers zu nutzen.

Die Erfindung ist nicht auf die angegebene Kombination der Merkmale des Hauptanspruchs und der abhängigen Ansprüche beschränkt. Es ergeben sich darüber hinaus Möglichkeiten, einzelne Merkmale, auch soweit sie aus den Ansprüchen, der nachfolgenden Beschreibung der Ausführungsform oder unmittelbar aus den Zeichnungen hervorgehen, miteinander zu kombinieren. Die Bezugnahme der Ansprüche auf die Zeichnungen durch die Verwendung von Bezugszeichen soll den Schutzumfang der Ansprüche nicht beschränken.

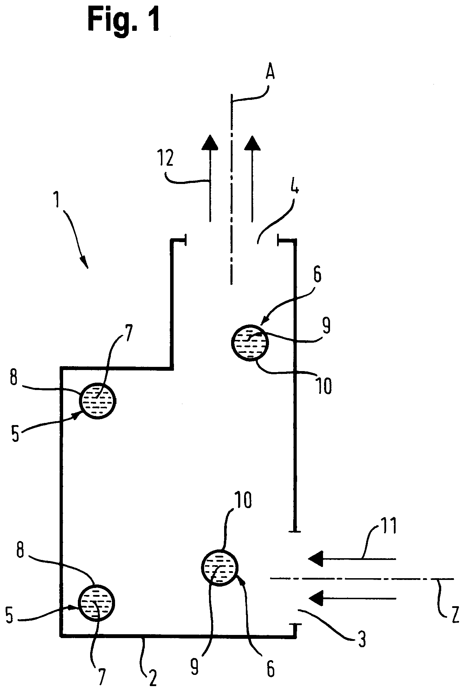

Die Erfindung wird im Folgenden anhand des in der beiliegenden Figur gezeigten Ausführungsbeispiels für die erfindungsgemäße Vorrichtung näher erläutert. Es zeigt
Fig. 1: eine schematische Darstellung eines Längsschnitts durch eine Ausführungsform der erfindungsgemäßen Vorrichtung.
Figur 1 zeigt schematisch einen Längsschnitt durch ein Ausführungsbeispiel für die erfindungsgemäße Vorrichtung 1 zum Speichern von einem Fluid entzogener thermischer Energie in Form von latenter Wärme.

Die Vorrichtung 1 weist eine Kammer 2 auf, die von dem durch eine entsprechende Leitung zu- und abgeführtes Fluid durchströmbar ist. Hierzu weist die Kammer einen Zugang 3 auf, durch den das Fluid gemäß den Pfeilen 11 in die Kammer 2 eintreten kann. Des Weiteren weist die Kammer 2 einen Abgang 4 auf, durch den das Fluid entsprechend den Pfeilen 12 wieder aus der Kammer 2 austreten kann. Die Leitung schließt an den Zugang 3 und an den Abgang 4 an. Der Zugang 3 liegt auf einer Zugangsachse Z, welche parallel zu den Pfeilen 11 und unter einem 90°-Winkel zu der Abgangsachse A ausgerichtet ist, auf der der Abgang 4 liegt und die parallel zu den Pfeilen 12 ausgerichtet ist. Durch diese kompakte Ausgestaltung der Vorrichtung 1 ist diese sehr raumsparend einsetzbar. Jedoch treten durch diese Gestaltung der Kammer 2 innerhalb der Kammer 2 unterschiedliche Strömungsgeschwindigkeiten des Fluids auf. Insbesondere staut es sich in den beiden links dargestellten Ecken der Kammer, so dass dort eine sehr niedrige Strömungsgeschwindigkeit gegeben ist. Hingegen liegen beispielsweise in Bereichen hinter dem Zugang 3 und vor dem Abgang 4 hohe Strömungsgeschwindigkeiten vor.

In der Kammer 2 sind vier Speicherelemente 5 und 6 angeordnet, wobei die Speicherelemente 6 in Bereichen der Kammer 2 angeordnet sind, in dem durch die bauliche Ausgestaltung der Kammer 2 höhere Strömungsgeschwindigkeiten als in den Bereichen der Kammer 2 auftreten, in denen die Speicherelemente 5 angeordnet sind. Zur Vereinfachung der Darstellung sind in der Zeichnung nur diese vier Speicherelemente 5 und 6 gezeigt; im Normalfall wird aber innerhalb der Kammer 2 eine größere Anzahl unterschiedlicher Speicherelemente angeordnet sein.

Die Speicherelemente 5 sind jeweils durch ein Speichermedium 7 und eine dieses umgebende Ummantelung 8 gebildet, wobei die Ummantelung 8 als Glasröhrchen ausgebildet ist. Die Speicherelemente 6 weisen ebenso Ummantelungen 10 in Form von Glasröhrchen auf, in denen das Speichermedium 9 angeordnet ist. Die Phasenübergangstemperatur des Speichermediums 7 ist niedriger als die des Speichermediums 9.

Das anhand der Figur beschriebene Ausführungsbeispiel dient der Erläuterung und ist nicht auf das in diesem Offenbarte beschränkend.

### BEZUGSZEICHEN

- 1: Vorrichtung
- 2: Kammer
- 3: Zugang
- 4: Abgang
- 5: Speicherelement
- 6: Speicherelement
- 7: Speichermedium
- 8: Ummantelung
- 9: Speichermedium
- 10: Ummantelung
- 11: Pfeil
- 12: Pfeil

## Patentansprüche

1. Vorrichtung (1) zum Speichern von einem Fluid entzogener thermischer Energie in Form von latenter Wärme, mit einer einen Zugang (3) und einen Abgang (4) aufweisenden, von dem Fluid durchströmbaren Kammer (2) und wenigstens zwei getrennt voneinander in der Kammer (2) angeordneten, von dem Fluid umströmbaren Speichermedien (7, 9), deren Phasenübergangstemperaturen sich unterscheiden, **dadurch gekennzeichnet, dass** die Positionierung der Speichermedien (7, 9) relativ zur Kammer (2) in Abhängigkeit der baulich bedingt unterschiedlichen Strömungsgeschwindigkeiten des Fluids in der Kammer (2) derart ausgewählt ist, dass das Speichermedium (7) mit der niedrigeren Phasenübergangstemperatur in einem Bereich der Kammer (2) angeordnet ist, in dem die Strömungsgeschwindigkeit des Fluids geringer als in dem Bereich der Kammer (2) ist, in dem das Speichermedium (9) mit der höheren Phasenübergangstemperatur angeordnet ist.

2. Vorrichtung (1) nach Anspruch 1, **dadurch gekennzeichnet, dass** sich die Phasenübergangstemperaturen der Speichermedien (7, 9) um bis etwa zu 20 °K unterscheiden.

3. Vorrichtung (1) nach Anspruch 1, **dadurch gekennzeichnet, dass** der Zugang (3) auf einer Zugangsachse (Z) und der Abgang (4) auf einer Abgangsachse (A) liegt, wobei die Zugangsachse (Z) winklig zu der Abgangsachse (A) angeordnet ist.

4. Vorrichtung (1) nach Anspruch 1, **dadurch gekennzeichnet, dass** wenigstens ein Speichermedium (7, 9) zumindest teilweise mit einer Glasummantelung (8, 10) versehen ist.

5. Vorrichtung (1) nach Anspruch 1, **dadurch gekennzeichnet, dass** die Phasenübergangstemperaturen dem Phasenübergang fest-flüssig zugeordnet sind.

6. Haushaltsgerät mit wenigstens einer von einem Fluid durchströmbaren Leitung (3, 4), **gekennzeichnet durch** wenigstens eine in der Leitung (3, 4) angeordnete Vorrichtung (1) zum Speichern von einem Fluid entzogener thermischer Energie in Form von latenter Wärme, mit einer einen Zugang (3) und einen Abgang (4) aufweisenden, von dem Fluid durchströmbaren Kammer (2) und wenigstens zwei getrennt voneinander in der Kammer (2) angeordneten, von dem Fluid umströmbaren Speichermedien (7, 9), deren Phasenübergangstemperaturen sich unterscheiden, wobei die Positionierung der Speichermedien (7, 9) relativ zur Kammer (2) in Abhängigkeit der baulich bedingt unterschiedlichen Strömungsgeschwindigkeiten des Fluids in der Kammer (2) derart ausgewählt ist, dass das Speichermedium (7) mit der niedrigeren Phasenübergangstemperatur in einem Bereich der Kammer (2) angeordnet ist, in dem die Strömungsgeschwindigkeit des Fluids geringer als in dem Bereich der Kammer (2) ist, in dem das Speichermedium (9) mit der höheren Phasenübergangstemperatur angeordnet ist.

## Claims

1. Device (1) for storing thermal energy extracted from a fluid in the form of latent heat, comprising a chamber (2), which has an inlet (3) and an outlet (4) and through which the fluid can flow, and at least two storage media (7, 9), which are arranged separately from each other in the chamber (2) and around which the fluid can flow and the phase transition temperatures of which differ from each other, **characterised in that** the positioning of the storage media (7, 9) relative to the chamber (2) is selected as a function of the design-related different flow rates of the fluid in the chamber (2) such that the storage medium (7) having the lower phase transition temperature is arranged in a region of the chamber (2) where the flow rate of the fluid is lower than in the region of the chamber (2) where the storage medium (9) having the higher phase transition temperature is arranged.

2. Device (1) according to claim 1, **characterised in that** the phase transition temperatures of the storage media (7, 9) differ by up to around 20°K.

3. Device (1) according to claim 1, **characterised in that** the inlet (3) lies on an inlet axis (Z) and the outlet (4) lies on an outlet axis (A), wherein the inlet axis (Z) is arranged at an angle to the outlet axis (A).

4. Device (1) according to claim 1, **characterised in that** at least one storage medium (7, 9) is provided at least partially with glass sheathing (8, 10).

5. Device (1) according to claim 1, **characterised in that** the phase transition temperatures are assigned to the solid-liquid phase transition.

6. Domestic appliance having at least one line (3, 4) through which a fluid can flow, **characterised by** at least one device (1) arranged in the line (3, 4) for storing thermal energy extracted from a fluid in the form of latent energy, comprising a chamber (2), which has an inlet (3) and an outlet (4) and through which the fluid can flow, and at least two storage media (7, 9), which are arranged separately from each other in the chamber (2) and around which the fluid can flow and the phase transition temperatures of which differ from each other, wherein the positioning of the storage media (7, 9) relative to the chamber (2) is selected as a function of the design-related different flow rates of the fluid in the chamber (2) such that the storage medium (7) having the lower phase transition temperature is arranged in a region of the chamber (2) where the flow rate of the fluid is lower than in the region of the chamber (2) where the storage medium (9) having the higher phase transition temperature is arranged.

## Revendications

1. Dispositif (1) destiné à accumuler de l'énergie thermique extraite d'un fluide sous forme de chaleur latente, comprenant une chambre (2) avec une entrée (3) et une sortie (4), dans laquelle peut circuler le fluide, et au moins deux milieux d'accumulation (7, 9) agencés séparément l'un de l'autre dans la chambre (2), autour desquels peut circuler le fluide et dont les températures de transition de phase diffèrent, **caractérisé en ce que** le positionnement des milieux d'accumulation (7, 9) par rapport à la chambre (2) est choisi en fonction des vitesses d'écoulement du fluide dans la chambre (2), qui sont différentes du fait de la structure, de telle sorte que le milieu d'accumulation (7) ayant la température de transition de phase plus basse est agencé dans une zone de la chambre (2), dans laquelle la vitesse d'écoulement du fluide est plus faible que dans la zone de la chambre (2), dans laquelle est agencé le milieu d'accumulation (9) ayant la température de transition de phase plus élevée.

2. Dispositif (1) selon la revendication 1, **caractérisé en ce que** les températures de transition de phase des milieux d'accumulation (7, 9) diffèrent jusqu'à environ 20 °K.

3. Dispositif (1) selon la revendication 1, **caractérisé en ce que** l'entrée (3) est située sur un axe d'entrée (Z) et la sortie (4) sur un axe de sortie (A), l'axe d'entrée (Z) étant disposé suivant un angle par rapport à l'axe de sortie (Z).

4. Dispositif (1) selon la revendication 1, **caractérisé en ce qu'**au moins un milieu d'accumulation (7, 9) est muni d'un revêtement en verre (8, 10).

5. Dispositif (1) selon la revendication 1, **caractérisé en ce que** les températures de transition de phase sont associées à la transition de phase solide-liquide.

6. Appareil ménager comprenant au moins une conduite (3, 4) dans laquelle peut circuler un fluide, **caractérisé par** au moins un dispositif (1) monté dans la conduite (3, 4) destiné à accumuler de l'énergie thermique extraite d'un fluide sous forme de chaleur latente, comprenant une chambre (2) avec une entrée (3) et une sortie (4), dans laquelle peut circuler le fluide, et au moins deux milieux d'accumulation (7, 9) agencés séparément l'un de l'autre dans la chambre (2), autour desquels peut circuler le fluide et dont les températures de transition de phase diffèrent, dans lequel le positionnement des milieux d'accumulation (7, 9) par rapport à la chambre (2) est choisi en fonction des vitesses d'écoulement du fluide dans la chambre (2), qui sont différentes du fait de la structure, de telle sorte que le milieu d'accumulation (7) ayant la température de transition de phase plus basse est agencé dans une zone de la chambre (2), dans laquelle la vitesse d'écoulement du fluide est plus faible que dans la zone de la chambre (2), dans laquelle est agencé le milieu d'accumulation (9) ayant la température de transition de phase plus élevée.
